# EUROPÄISCHE PATENTSCHRIFT

(11) **EP 2 726 714 B1**
(45) Veröffentlichungstag und Bekanntmachung des Hinweises auf die Patenterteilung: **05.04.2017**
(21) Anmeldenummer: 12735112.0
(22) Anmeldetag: 29.06.2012
(51) Int. Cl.: F01L 1/047, F16H 53/02, B21D 53/84

(54) **NOCKENWELLE MIT AXIAL VERSCHIEBBAREM NOCKENPAKET**
CAMSHAFT WITH AXIALLY SLIDABLE CAM PACKET
ARBRE À CAMES À PAQUET DE CAMES DÉPLACABLE AXIALEMENT

(30) Priorität: 30.06.2011 DE 102011051480
(43) Veröffentlichungstag der Anmeldung: 07.05.2014
(73) Patentinhaber: Thyssenkrupp Presta Teccenter Ag, 9492 Eschen (LI)
(72) Erfinder: BINDER, Thomas, A-6800 Feldkirch (AT); WIESNER, Peter, FL-9493 Mauren (LI)
(74) Vertreter: ThyssenKrupp Intellectual Property GmbH
(86) Internationale Anmeldenummer: PCT/EP2012/062722
(87) Internationale Veröffentlichungsnummer: WO 2013/001069

(56) Entgegenhaltungen:
- EP-A2- 0 723 094
- EP-A2- 1 754 913
- WO-A1-2011/072782
- WO-A2-2011/018075
- CH-A5- 694 277
- DE-A1-102007 022 145
- DE-A1-102008 064 340
- DE-A1-102009 022 657
- DE-A1-102009 055 868
- DE-A1-102010 004 579
- DE-A1-102010 060 766
- DE-U1- 9 313 056

## Beschreibung

Die Erfindung betrifft eine Nockenwelle mit einer Trägerwelle, die in einer Wellenachse drehbeweglich lagerbar ist, wobei auf der Trägerwelle wenigstens ein Nockenpaket axial verschieblich angeordnet ist, und wobei das Nockenpaket wenigstens zwei Nocken und/oder ein Mehrfachnockenelement und wenigstens ein Verstellglied zur axialen Verstellung des Nockenpaketes umfasst. Die Verbindung zwischen den Nocken bzw. dem Mehrfachnockenelement und dem Verstellglied ist mittels eines angeformten Körpers ausgebildet.

Derartige Nockenwellen werden für Brennkraftmaschinen verwendet, die mit einem verstellbaren Ventilhub oder mit verstellbaren Ventilsteuerzeiten betrieben werden können. Die Ventile der Brennkraftmaschine werden über Nockenpakete angesteuert, die axial verschieblich auf der rotierenden Trägerwelle angeordnet sind. Durch die axiale Verschiebung des Nockenpaketes auf der Trägerwelle können die Ventile mit verschiedenen Nocken gesteuert werden, wobei die verschiedenen Nocken unterschiedliche Nockenformen aufweisen können. Dabei können sowohl die Nockenkuppen geometrisch unterschiedlich stark ausgeprägt sein oder die Position der Nockenkuppen in Umfangsrichtung variiert zueinander. Auch sind Nocken bekannt, die als Nullhubnocken ausgeführt sind.

Nockenpakete weisen mehrere Nocken auf, wobei wenigstens ein Verstellglied Bestandteil des Nockenpaketes ist, über das die axiale Verschiebung in das Nockenpaket eingeleitet wird.

### STAND DER TECHNIK

Aus der DE 10 2009 022 657 A1 ist eine Nockenwelle mit einer Trägerwelle bekannt, die in einer Wellenachse drehbeweglich lagerbar ist, um in einer Brennkraftmaschine betrieben zu werden. Auf der Trägerwelle ist ein Nockenpaket angeordnet, das beispielhaft aus vier Nocken ausgebildet ist. Das Nockenpaket umfasst ein Trägerrohr, das über eine Innenverzahnung und eine Außenverzahnung axial verschieblich auf der Trägerwelle angeordnet ist, sodass die Drehbewegung der Trägerwelle über einen geometrischen Formschluss auf das Trägerrohr übertragen wird. Auf dem Trägerrohr sind mehrere Nocken angeordnet, sodass das Nockenpaket vier Nocken mit zwei unterschiedlichen Nockenkonturen aufweist. Das Trägerrohr ist aus Kunststoff gebildet und wird um die Nockenelemente gespritzt.

Die DE 10 2004 011 586 A1 zeigt eine weitere Nockenwelle mit einer Trägerwelle, und es ist ein Trägerrohr gezeigt, das mit mehreren Nocken einteilig ausgeführt ist. Das Trägerrohr besitzt eine Innenverzahnung, die mit einer Außenverzahnung der Trägerwelle kämmt, um das Nockenpaket axial auf der Trägerwelle verschieblich anzuordnen, und um zugleich eine Drehübertragung der Trägerwelle auf das Nockenpaket durch einen geometrischen Formschluss zu schaffen. Zwischen den Nockenkonturen weist das Trägerrohr ein Lagerelement auf, um das Nockenpaket in einem Lagerbock drehbar zu lagern, der beispielsweise Bestandteil eines Zylinderkopfes sein kann.

Nachteilhafterweise weisen die Nockenwellen gemäß dem Stand der Technik Nockenpakete auf, die in gebauter Variante ein Trägerrohr erforderlich machen, um verschiedene Steuerelemente und Verstellglieder zu einem Nockenpaket zu fügen, oder massiv gefertigt werden müssen. Das Trägerrohr dient dabei zur Aufnahme auf der Trägerwelle und weist die notwendige Innenverzahnung auf, die mit der Außenverzahnung auf der Trägerwelle kämmen kann. Nachteilhafterweise entsteht durch die Verwendung eines Trägerrohres zur Aufnahme der Nocken und Verstellglieder ein aufwendiger Aufbau, und die Nocken müssen mit einer notwendigen Verbindungstechnik auf dem Trägerrohr angeordnet werden. Sind das Trägerrohr und die Nocken sowie beispielsweise auch das Verstellglied insgesamt einteilig ausgeführt, entsteht ein aufwendig herzustellendes Bauteil, an dem eine Vielzahl von Bearbeitungsoperationen ausgeführt werden müssen. Jedoch ist es technisch vorteilhaft, sowohl eine spanende Bearbeitung als auch eine thermische Behandlung verschiedener Elemente des Nockenpaketes einzeln vornehmen zu können.

Die DE 10 2009 055 868 A1 offenbart eine Nockenwelle mit mindestens einem Trägerelement und mindestens einem Nocken. Das Trägerelement weist mindestens zwei Trägerabschnitte auf, die im Wesentlichen axial hintereinander längs einer Längsachse angeordnet sind und mittels einer Wälzkörperlagerung axial verschiebbar zueinander gelagert sind.

### OFFENBARUNG DER ERFINDUNG

Es ergibt sich die Aufgabe der vorliegenden Erfindung, eine Nockenwelle mit einem Nockenpaket zu schaffen, das die vorstehend bezeichneten Nachteile des Standes der Technik überwindet und einen einfachen Aufbau aufweist, wobei die verschiedenen Elemente des Nockenpaketes auch einzeln spanend bearbeitet und thermisch behandelt werden können.

Diese Aufgabe wird ausgehend von einer Nockenwelle mit einem axial verschiebbaren Nockenpaket gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Verbund aus den Nocken bzw. dem Mehrfachnockenelement und dem Verstellglied mittels einer Wälzkörperführung mit Wälzkörpern auf der Trägerwelle axial verschiebbar gelagert ist, wobei in den Nocken und/oder in einem Mehrfachnockenelement wenigstens eine Führungsnut zur Wälzkörperführung eingebracht ist.

Die Erfindung geht dabei von dem Gedanken aus, die einzelnen Steuerelemente des Nockenpaketes unmittelbar miteinander in Verbindung zu bringen, um das Nockenpaket ohne die Verwendung eines Trägerrohres auszuführen. Durch die direkte Verbindung der Nocken, im Folgenden einschließlich auch des Mehrfachnockenelements, und des wenigstens einen Verstellgliedes mit den benachbart zu diesen angeordneten Nocken, im allgemeinen Gedanken der Erfindung ferner jedes an einem Nockenpaket beteiligten Elementes, erübrigt sich die Verwendung eines Trägerrohres, und die Nocken und das wenigstens eine Verstellglied können mittels der Wälzkörperführung mit den Wälzkörpern direkt auf der Trägerwelle axial verschiebbar angeordnet werden. Durch die direkte Verbindung der Nocken untereinander und des Verstellgliedes mit den benachbart zu diesem angeordneten Nocken wird ein Verbund aus einzelnen Elementen geschaffen, die vor der gemeinsamen Verbindung miteinander einzeln bearbeitet werden können. Nachdem der Verbund aus den Nocken und dem Verstellglied geschaffen ist, kann dieser ohne weitere Verwendung eines Trägerrohres oder eines sonstigen Elementes direkt auf der Trägerwelle angeordnet werden.

Die Erfindung bietet den besonderen Vorteil, die Nocken und das Verstellglied mit einer Wälzkörperführung auszuführen, die mit der Trägerwelle korrespondiert und der so gebildete Verbund kann axial beweglich und drehübertragend auf der Trägerwelle angeordnet werden. Mit weiterem Vorteil können beispielsweise lediglich außenseitige Elemente, beispielsweise eine erste außenseitige Nocke und eine gegenüberliegende, zweite außenseitige Nocke, mit einer Wälzkörperführung ausgeführt sein. Dadurch wird der Vorteil erreicht, dass lediglich zwei Elemente des Nockenpaketes mit einer Wälzkörperführung ausgeführt werden müssen.

Mit weiterem Vorteil kann in wenigstens einen der Nocken, jedoch vorzugsweise im Verstellglied zumindest eine Rastnut eingebracht sein, die zur axialen Verrastung des Nockenpaketes mit einem Rastmittel zusammenwirken können, das in der Trägerwelle angeordnet ist. Das Rastmittel kann beispielsweise eine federbelastete Kugel sein, die in die Rastnuten eingedrückt wird. Damit können vorgegebene axiale Positionen des Nockenpaketes durch die axiale Verstellung definiert werden, wobei die Anzahl der Rastnuten vorzugsweise mit der Anzahl der Nocken verschiedener Nockenkonturen korrespondiert. Mit besonderem Vorteil können die Rastnuten in Elementen des Nockenpaketes eingebracht sein, die nicht mit einer Wälzkörperführung ausgeführt sind.

Die Nocken und das Verstellglied können zumindest über Teilbereiche ihrer jeweiligen Stirnseiten miteinander verbunden sein. Die Stirnseiten können durch Planflächen gebildet sein, zu denen die Wellenachse eine Flächennormale bildet. Werden die Nocken und das Verstellglied in axial benachbarter Anordnung plan aufeinander gebracht, kann die Verbindung zwischen den Nocken und/oder dem Verstellglied vorgenommen werden. Mit besonderem Vorteil können die Verbindungen als stoffschlüssige Verbindungen ausgeführt werden.

Die stoffschlüssigen Verbindungen zwischen den Nocken und dem wenigstens einen Verstellglied und den dazu benachbarten Nocken können mittels Schweißverbindungen ausgeführt sein, und es können Schweißverbindungen beispielsweise außenumfänglich und/oder innenumfänglich angeordnet werden. Die Schweißverbindungen können beispielsweise mit einem Laserstrahl-Schweißverfahren oder mit einem Elektronenstrahl-Schweißverfahren ausgeführt werden, um die wärmebeeinflusste Materialzone in den Nocken und/oder im Verstellglied zu minimieren. Ferner kann durch diese Schweißverfahren der thermische Verzug der Paketanordnung des Nockenpaketes minimiert werden. Mit besonderem Vorteil kann die Schweißverbindung mit Bildung einer Dampfkapillare erzeugt werden, um eine besonders tiefe Einschweißung zwischen den Stirnflächen der Nocken und/oder des Verstellgliedes zu erzeugen, sodass die Schweißverbindung mechanisch besonders hoch belastbar ist.

Nach einer möglichen Ausführungsform der Erfindung können die stoffschlüssigen Verbindungen zwischen den Nocken und dem wenigstens einen Verstellglied mittels Lötverbindungen und/oder Klebeverbindungen ausgeführt werden. Grundsätzlich kann nach Herstellung der stoffschlüssigen Verbindungen zwischen den Nocken und dem Verstellglied eine mechanische Endbearbeitung der Funktionsflächen der Nocken und/oder des Verstellgliedes erfolgen.

Mit weiterem Vorteil können die Verbindungen zwischen den Nocken und/oder des Mehrfachnockenelementes und des Verstellgliedes mit den benachbart dazu angeordneten Nocken über zumindest einen und vorzugsweise mehrere auf dem Umfang des Nockenpaketes gleich verteilte Zuganker ausgebildet sein, der oder die sich durch die Nocken und das Verstellglied hindurch erstrecken. Die Zuganker können durch Gewindebolzen oder dergleichen gebildet sein und können nach Anordnung im Nockenpaket eine Zugspannung aufnehmen. Folglich werden die Nocken und das Verstellglied axial aufeinander gepresst, um einen mechanisch belastbaren Verbund aus den Nocken und dem Verstellglied zu bilden. Alternativ ist auch denkbar, die Nocken miteinander und das Verstellglied mit seinen benachbarten Nocken durch eine oder mehrere Nietverbindungen zu verbinden. Mit weiterem Vorteil können die Nocken und das Verstellglied beispielsweise miteinander verstiftet werden, oder es können an den Stirnseiten der Nocken und des Verstellgliedes Formschlussgeometrien angebracht sein, um anschließend die Zuganker durch die Nocken und das Verstellglied hindurchzuführen und unter Zugspannung zu setzen.

Als weitere mögliche Ausführungsform der Erfindung können die Verbindungen der Nocken und des wenigstens einen Verstellgliedes mit seinen benachbarten Nocken jeweils über zumindest ein formschlüssig wirkendes Fügeelement ausgebildet sein, das vorzugsweise an den Nocken und/oder am wenigstens einen Verstellglied angeordnet oder zwischen den Stirnseiten ausgebildet ist. Die formschlüssig wirkenden Fügeelemente können einteilig mit den Nocken und/oder dem Verstellglied ausgebildet oder sogar an diesen angeformt sein. Beispielsweise können zwischen den Nocken und/oder dem Verstellglied Gewindeverbindungen, Bajonettverbindungen, Hinterschnittverbindungen oder sonstige Verbindungen vorgesehen sein, oder es sind Fügeelemente wie Nutensteine oder dergleichen vorgesehen. Grundsätzlich kann jede mögliche Verbindungsausführung zwischen den Nocken und/oder dem Verstellglied vorgesehen sein, um diese mechanisch belastbar miteinander zu verbinden. Die Verbindung der Nocken und/oder des Verstellgliedes sollte vorzugsweise spielfrei herstellbar sein, und die Verbindung sollte die rotatorische Position der Elemente um die gemeinsame Wellenachse aufrechterhalten.

Nach einer weiteren vorteilhaften Ausführungsform kann das Nockenpaket wenigstens ein Lagerelement umfassen, das vorzugsweise zur Bildung eines Nullhubnocken ausgebildet ist. Ein Nullhubnocken weist eine zylindrische Mantelfläche auf, wobei das Lagerelement eine axiale Breite aufweisen kann, die sowohl die Lagerung des Nockenpaketes über das Lagerelement als auch die gleichzeitige Wirkverbindung des Lagerelementes mit einem Abgriffselement zur Ventilsteuerung ermöglicht.

Gemäß einer vorteilhaften Weiterbildung der erfindungsgemäßen Nockenwelle und des Nockenpaketes können wenigstens zwei Nocken zumindest ein einteiliges Mehrfachnockenelement bilden, das axial benachbart zum Verstellglied angeordnet ist, wobei in den Nocken und/oder im Mehrfachnockenelement wenigstens eine Führungsnut eingebracht ist, in der zumindest ein Wälzkörper geführt ist. Die Bereitstellung eines Mehrfachnockenelementes mit zwei oder mehr Nocken bildet den Vorteil, dass die Nocken nicht über beispielsweise ein weiteres stoffschlüssiges Fügeverfahren miteinander verbunden werden müssen. Die Zusammenfassung mehrerer Nocken zu einem Mehrfachnockenelement ist beispielsweise dann vorteilhaft, wenn die Nocken aus einem einheitlichen Werkstoff und beispielsweise in einer gemeinsamen mechanischen Aufspannung zur spanenden Bearbeitung hergestellt werden können. Um für die Wälzkörper der Wälzkörperführung eine Führung zu schaffen, kann in der Durchgangsbohrung, die innenseitig im Mehrfachnockenelement oder in einzelnen Nocken eingebracht ist, wenigstens eine Führungsnut eingebracht sein, in der Wälzkörper geführt werden können. Die Wälzkörperführung und insbesondere die Führungsnut können dabei parallel zur Wellenachse oder schraubenförmig um die Wellenachse herum ausgebildet sein. Das Mehrfachnockenelement kann beispielsweise mit dem Verstellglied verbunden werden, wobei zur Verbindung obenstehend beschriebene stoffschlüssige Verfahren Verwendung finden können. Insbesondere kann ein Verstellglied vorgesehen sein, und auf einer ersten Seite des Verstellgliedes kann ein erstes Mehrfachnockenelement und auf einer gegenüberliegenden zweiten Seite des Verstellgliedes kann ein weiteres Mehrfachnockenelement in einer gemeinsamen Wellenachse angeordnet werden.

Mit weiterem Vorteil kann in der Trägerwelle wenigstens eine Führungsnut eingebracht werden, in der der zumindest eine Wälzkörper geführt ist, sodass über den Wälzkörper und die Führungsnuten das Nockenpaket axial geführt und gegen die Trägerwelle verdrehgesichert ist. Durch die beiden Führungsnuten und die in diesen aufgenommenen Wälzkörper entsteht die Anordnung einer wälzkörpergelagerten Linearführung, wobei verteilt auf dem Umfang der Durchgangsbohrung im Mehrfachnockenelement, in dem oder in den Nocken und/oder im Verstellglied mehrere Führungsnuten eingebracht sein können, die mit einer entsprechenden Anzahl von Führungsnuten auf der Trägerwelle korrespondieren können.

Erfindungsgemäß ist vorgesehen, dass die Verbindung wenigstens zwischen den Nocken und insbesondere dem Mehrfachnockenelement und dem Verstellglied mittels eines angeformten, insbesondere angegossenen Körpers ausgebildet ist, wobei das Material des angeformten Körpers aus Aluminium, aus Magnesium oder aus Kunststoff gebildet und insbesondere in einem Spritzgussverfahren oder in einem Druckgussverfahren angegossen ist. Der angeformte Körper kann dabei zwischen dem Mehrfachnockenelement und dem Verstellglied angeformt, insbesondere angegossen, angespritzt oder im Druckgussverfahren angeformt werden, sodass eine Verbindung zwischen dem Mehrfachnockenelement und dem Verstellglied entsteht.

Gemäß einer weiteren vorteilhaften Ausführungsform kann das Verstellglied wenigstens zweiteilig ausgebildet sein, wobei ein erster Teil des Verstellgliedes durch ein Steuerkonturelement und ein zweiter Teil des Verstellgliedes durch den angegossenen Körper gebildet ist. Im Steuerkonturelement ist eine Steuerbahn eingebracht, die mit einem externen Element zusammenwirkt, um das Nockenpaket entlang der Wellenachse auf der Trägerwelle axial zu verschieben.

Weiterhin kann vorgesehen sein, dass bei der Anordnung von zwei Mehrfachnockenelementen auf gegenüberliegenden Seiten des Verstellgliedes jeweilige Fügeabschnitte der Mehrfachnockenelemente aufeinander zu weisen, die mit dem Verstellglied und insbesondere mit dem Steuerkonturelement durch den angegossenen Körper vergossen werden können. Das Material des angeformten Körpers füllt dabei insbesondere den radialen Spalt zwischen dem Fügeabschnitt des Mehrfachnockenelementes und der Innenseite des Steuerkonturelementes aus. Der angegossene Körper kann dabei in Richtung zur Wellenachse breiter ausgeführt werden als das Steuerkonturelement, sodass dieses in den angeformten Körper eingebettet und somit durch diesen aufgenommen ist. Zugleich entsteht durch den angegossenen Körper eine mechanisch belastbare Verbindung zwischen dem Steuerkonturelement und den Mehrfachnockenelementen, sodass der angeformte Körper sowohl einen Teil des Verstellgliedes als auch ein Mittel zur Verbindung des Verstellgliedes mit dem wenigstens einen Mehrfachnockenelement bildet. Auf gleiche Weise kann der angeformte Körper auch einen Teil des Verstellgliedes bilden, und ferner das Steuerkonturelement mit dem Nockenkörper verbinden.

Am Fügeabschnitt des Mehrfachnockenelementes kann ein Formschlussbund angeordnet sein, sodass mit dem angegossenen Körper zumindest in Richtung der Wellenachse ein Formschluss zwischen dem Verstellglied und dem Mehrfachnockenelement gebildet ist. Der Formschlussbund kann beispielsweise einen Kragen am Ende des Fügeabschnittes des Mehrfachnockenelementes bilden, der durch den angegossenen Körper umschlossen wird.

Die Erfindung betrifft ferner ein Nockenpaket umfassend zumindest zwei Nocken und wenigstens ein Verstellglied zur axialen Verstellung des Nockenpaketes auf einer Trägerwelle, wobei die Nocken und das wenigstens eine Verstellglied in axial benachbarter Anordnung miteinander verbunden sind und als Verbund zur direkten Anordnung auf der Trägerwelle ausgebildet sind. Die Vorteile und Ausführungsformen der vorstehend bezeichneten Nockenwelle mit einem entsprechenden Nockenpaket finden für das gattungsbildende Nockenpaket ebenfalls Berücksichtigung.

Die Erfindung betrifft weiterhin ein Verfahren zur Herstellung einer Nockenwelle mit einer Trägerwelle, die in einer Wellenachse drehbeweglich lagerbar ist, wobei auf der Trägerwelle wenigstens ein Nockenpaket axial verschieblich angeordnet wird und wobei das Nockenpaket wenigstens zwei Nocken und wenigstens ein Verstellglied zur axialen Verstellung des Nockenpaketes umfasst, wobei erfindungsgemäß das Verfahren wenigstens die Schritte des gegenseitigen Fügens der Nocken und des wenigstens einen Verstellgliedes und den benachbart zu diesem angeordneten Nocken in axial benachbarter Anordnung und das direkte Anordnen des Verbundes auf der Trägerwelle mittels einer Wälzkörperführung mit Wälzkörpern umfasst.

Das Verfahren kann ferner das Einbringen einer Innenverzahnung oder einer Führungsnut in die Nocken, in das Mehrfachnockenelement und/oder in das Verstellglied umfassen, um mit einer Außenverzahnung auf der Trägerwelle axial verschiebbar im Eingriff zu stehen. Die Innenverzahnung oder die Führungsnut wird dabei direkt in das Material der Nocken und/oder des Verstellgliedes eingebracht. Gemäß einem weiteren Verfahrensschritt wird in wenigstens eine Nocke und/oder in das Verstellglied zumindest eine Rastnut eingebracht, die zur axialen Verrastung des Nockenpaketes mit einem Rastmittel zusammenwirken kann, das in der Trägerwelle angeordnet ist.

Nach einer möglichen Ausführungsform des erfindungsgemäßen Verfahrens kann die Innenverzahnung jeweils einzeln in die Nocken und in das Verstellglied eingebracht werden, wobei erst anschließend die Nocken und das Verstellglied in axial benachbarter Anordnung gegenseitig gefügt werden.

Alternativ können die Nocken, das Mehrfachnockenelement und/oder das Verstellglied in axial benachbarter Anordnung gegenseitig gefügt werden, wobei erst anschließend die Innenverzahnung bzw. die Führungsnut in die Nocken, in das Mehrfachnockenelement und/oder in das Verstellglied eingebracht wird. Auf gleiche Weise kann die zumindest eine Rastnut vor oder nach dem Fügen der Nocken und des Verstellgliedes miteinander eingebracht werden.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine quergeschnittene Ansicht durch eine nicht beanspruchte Nockenwelle mit einem Nockenpaket,
- Figur 2: eine quergeschnittene Ansicht eines nicht beanspruchten Nockenpaketes zur Bildung der Verbindungen zwischen den Nocken und dem Verstellglied,
- Figur 3: eine weitere quergeschnittene Ansicht eines nicht beanspruchten Nockenpaketes zur Bildung der Verbindungen zwischen den Nocken und dem Verstellglied,
- Figur 4: eine weitere quergeschnittene Ansicht eines nicht beanspruchten Nockenpaketes zur Bildung der Verbindungen zwischen den Nocken und dem Verstellglied,
- Figur 5: ein nicht beanspruchtes Nockenpaket, das zur Lagerung in einem Lager ein Lagerelement aufweist,
- Figur 6: ein Ausführungsbeispiel eines Nockenpaketes, das die Merkmale der Erfindung zeigt,
- Figur 7: das Ausführungsbeispiel des Nockenpaketes gemäß Figur 6 mit einer Wälzkörperführung in einer quergeschnittenen Ansicht und
- Figur 8: das Ausführungsbeispiel des Nockenpaketes gemäß Figur 6 in einer Explosionsdarstellung.

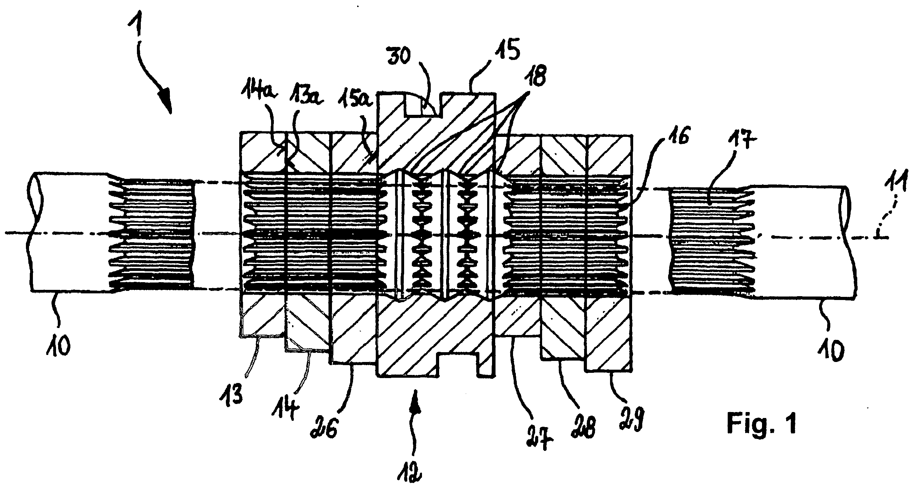

In Figur 1 ist eine Nockenwelle 1 mit einem Nockenpaket 12 gezeigt. Die Nockenwelle 1 weist eine Trägerwelle 10 auf, die im Setzbereich des Nockenpaketes 12 unterbrochen gezeigt ist. Die Trägerwelle 10 kann in einer Wellenachse 11 drehbeweglich lagerbar sein, beispielsweise im Zylinderkopf einer Brennkraftmaschine.

Das Nockenpaket 12 weist beispielhaft sechs Nocken 13, 14, 26, 27, 28 und 29 auf, wobei ein Verstellglied 15 vorgesehen ist, und im Verstellglied 15 ist eine Nutenführung 30 auf dem Außenumfang des Verstellgliedes 15 eingebracht. Die Nocken 13, 14 und 26 befinden sich auf einer ersten Seite des Verstellgliedes 15, und die Nocken 27, 28 und 29 befinden sich auf einer gegenüberliegenden, zweiten Seite des Verstellgliedes 15. Durch die Nocken 13, 14, 26, 27, 28, 29 und durch das Verstellglied 15 erstreckt sich eine Durchgangsbohrung, durch die die Trägerwelle 10 hindurchgeführt ist. In dieser durch die einzelnen Komponenten des Nockenpaketes 12 gebildeten Durchgangsbohrung ist eine Innenverzahnung 16 eingebracht, die mit einer Außenverzahnung 17 auf der Trägerwelle 10 axial verschiebbar und drehmomentübertragend in Eingriff steht. Die Außenverzahnung 17 der Trägerwelle 10 ist in Richtung zur Wellenachse 11 breiter ausgeführt als die Breite des Nockenpaketes 12, und das Nockenpaket 12 kann in Richtung zur Wellenachse axial verstellt werden, indem ein Verstellelement in der Nutenführung 30 des Verstellgliedes 15 geführt wird. Durch den Formschluss der Innenverzahnung 16 und der Außenverzahnung 17 wird dabei zugleich eine Drehbewegung der Trägerwelle 10 auf das Nockenpaket 12 übertragen.

Die Nocken 13, 14, 26, 27, 28, 29 und das Verstellglied 15 sind in axial benachbarter Anordnung zueinander miteinander verbunden, sodass durch die Verbindung dieser Komponenten des Nockenpaketes 12 über ihre jeweiligen sich in axialer Richtung ausbildenden Stirnseiten ein Verbund geschaffen wird, der bereits das Nockenpaket 12 bildet. Dazu ist kein Trägerrohr notwendig, auf dem die einzelnen Komponenten wie die Nocken 13, 14, 26, 27, 28, 29 und das Verstellglied 15 angeordnet werden müssen. Damit können die Innenverzahnung 16 und diese Rastnuten 18 direkt in die Nocken 13, 14, 26, 27, 28, 29 und in das Verstellglied 15 eingebracht werden, wobei beispielhaft drei Rastnuten 18 innenseitig in das Verstellglied 15 eingebracht sind, die zur axialen Verrastung des Nockenpaketes 12 mit einem Rastmittel zusammenwirken können, das in der Trägerwelle 10 in nicht näher gezeigter Weise angeordnet ist.

Die Nocken 13, 14, 26, 27, 28, 29 weisen jeweils unterschiedliche Nockenkonturen auf, beispielsweise können die Nocken 13, 14, 26, 27, 28, 29 unterschiedliche Nockenkuppen aufweisen oder die Nockenkuppen sind in unterschiedlichen Winkeln über dem Umfang ausgebildet. Durch die axiale Verstellbarkeit des Nockenpaketes 12 können Abgreifelemente, die eine feste axiale Position aufweisen, mit verschiedenen Nocken 13, 14, 26 oder 27, 28, 29 zusammenwirken, um beispielsweise den Ventilhub, jedoch beispielsweise auch Ventilsteuerzeiten zu ändern.

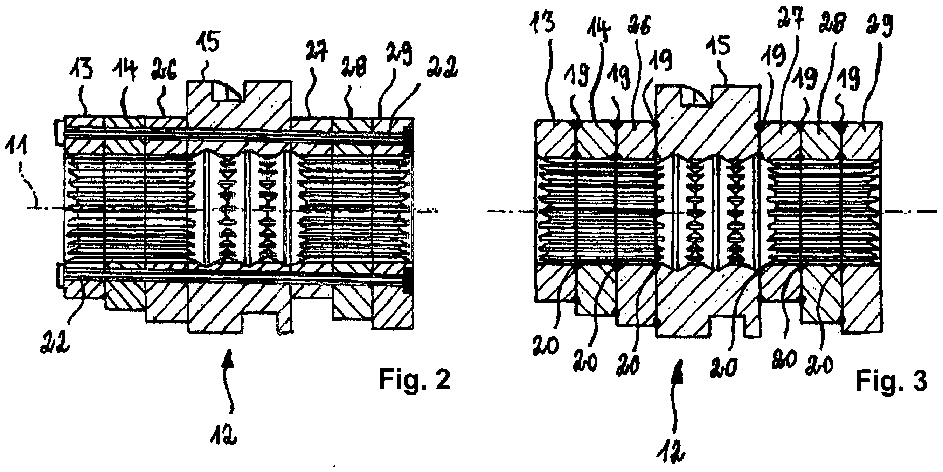

Figur 2 zeigt ein Beispiel zur Bildung eines Verbundes der Nocken 13, 14, 26, 27, 28, 29 und des Verstellgliedes 15. Die Verbindung ist durch Zuganker 22 gebildet, und es sind beispielhaft zwei Zuganker 22 über dem Umfang des Nockenpaketes 12 dargestellt, wobei insbesondere mehr als zwei Zuganker 22 vorgesehen sein können, die gleichverteilt auf dem Umfang des Nockenpaketes 12 angeordnet sind. Die Zuganker 22 erstrecken sich parallel zur Wellenachse 11 durch die Nocken 13, 14, 26, 27, 28, 29 und das Verstellglied 15, und sind unter axiale Zugspannung gesetzt. Damit werden die Komponenten des Nockenpaketes 12 stirnseitig aufeinander gepresst, um einen mechanisch belastbaren Verbund zu bilden. Die Zuganker 22 können als Schraubelemente oder als Spannstifte ausgebildet werden, um in die Zuganker 22 eine Zugspannung einzubringen.

Figur 3 zeigt ein weiteres Beispiel zur Bildung des Nockenpaketes 12, wobei die Verbindungen zwischen den Nocken 13, 14, 26, 27, 28, 29 und dem Verstellglied 15 über Schweißverbindungen 19, 20 ausgeführt sind. Die Schweißverbindungen 19 sind als außenumfängliche Schweißverbindungen und die Schweißverbindungen 20 sind als innenumfängliche Schweißverbindungen ausgebildet. Die außenumfänglichen und innenumfänglichen Schweißverbindungen 19 und 20 sind lediglich beispielhaft gezeigt, wobei beispielsweise auch lediglich innenumfängliche Schweißverbindungen 20 ausreichend sein können, um einen mechanisch belastbaren Verbund der Komponenten des Nockenpaketes 12 zu bilden. Beispielsweise können die Schweißverbindungen 19 und 20 durch Laserstrahl-Schweißungen oder durch Elektronenstrahl-Schweißungen erzeugt werden, um die thermische Einwirkung auf die Nocken 13, 14, 26, 27, 28, 29 und das Verstellglied 15 zu minimieren.

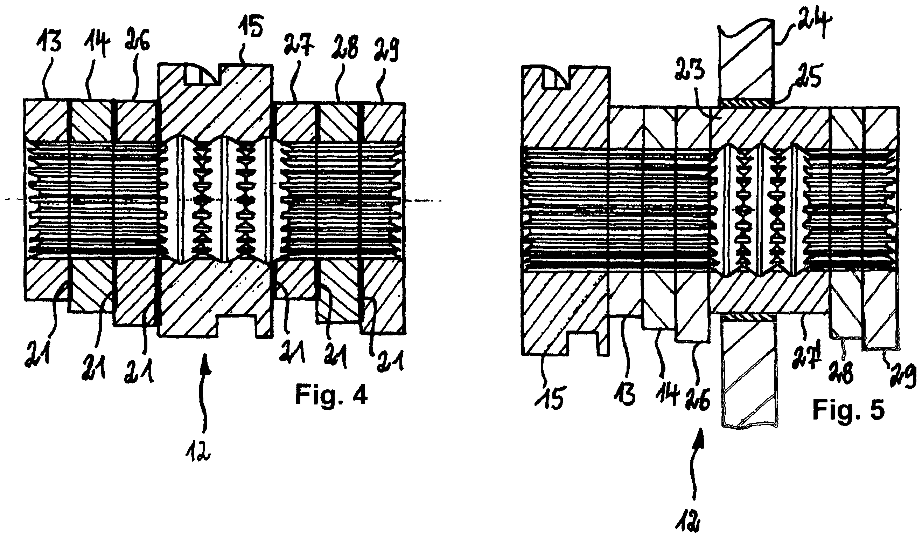

Figur 4 zeigt ein weiteres Beispiel zur Bildung des Nockenpaketes 12, wobei die Nocken 13, 14, 26, 27, 28, 29 untereinander und das Verstellglied 15 mit den benachbarten Nocken 26, 27 durch Lötverbindungen 21 verbunden sind. Die Lötverbindungen 21 können beispielsweise durch Lötfolien vorbereitet werden, die zwischen den einzelnen Komponenten des Nockenpaketes 12 angeordnet werden, und nach Anordnung der Nocken 13, 14, 26, 27, 28, 29 und des Verstellgliedes 15 in axial benachbarter Anordnung zueinander kann das derart vorbereitete Nockenpaket 12 auf Lotschmelztemperatur gebracht werden, um die Lötverbindungen 21 fertigzustellen. Alternativ zu den gezeigten Lötverbindungen 21 können Klebeverbindungen zwischen den Komponenten des Nockenpaketes 12 vorgesehen sein.

Figur 5 zeigt schließlich ein Nockenpaket 12 mit einem Verstellglied 15 und Nocken 13, 14, 26, 27', 28, 29, wobei die Nocke 27' zugleich als Lagerelement 23 ausgeführt ist. Die Nocke 27' ist als Nullhubnocke ausgeführt, und weist einen zylindrischen Außenumfang auf. Neben dem - nicht weiter gezeigten - Abgriff durch ein Abgriffselement zur Ventilsteuerung ist das Nockenpaket 12 in einem Lagerbock 24 gelagert, in den ein Lager 25 eingebracht ist. Damit erfüllt die Nocke 27' sowohl eine Nullhubfunktion zur Ventilsteuerung als auch die Funktion zur Lagerung des Nockenpaketes 12. Die Verbindung zwischen den Komponenten des Nockenpaketes 12 kann gemäß dem Ausführungsbeispiel in Figur 2, in Figur 3 oder in Figur 4 ausgeführt sein.

Im Ergebnis wird ein Nockenpaket 12 geschaffen, das ohne die Verwendung eines Trägerrohres ausgebildet werden kann. Weiterhin bleibt die Möglichkeit erhalten, die verschiedenen Komponenten des Nockenpaketes 12 jeweils einzeln mechanischen und/oder thermischen Bearbeitungsschritten zuzuführen, um die Komponenten erst anschließend zu einem Nockenpaket 12 miteinander zu verbinden.

Die Innenverzahnung 16, die in die Nocken 13, 14, 26, 27, 28, 29 und in das Verstellglied 15 eingebracht ist, kann in die jeweiligen Komponenten vor der Herstellung der Fügeverbindungen einzeln eingebracht werden oder die Innenverzahnung 16 wird in das Nockenpaket 12 eingebracht, wenn die Fügeverbindungen zwischen den einzelnen Komponenten bereits hergestellt ist.

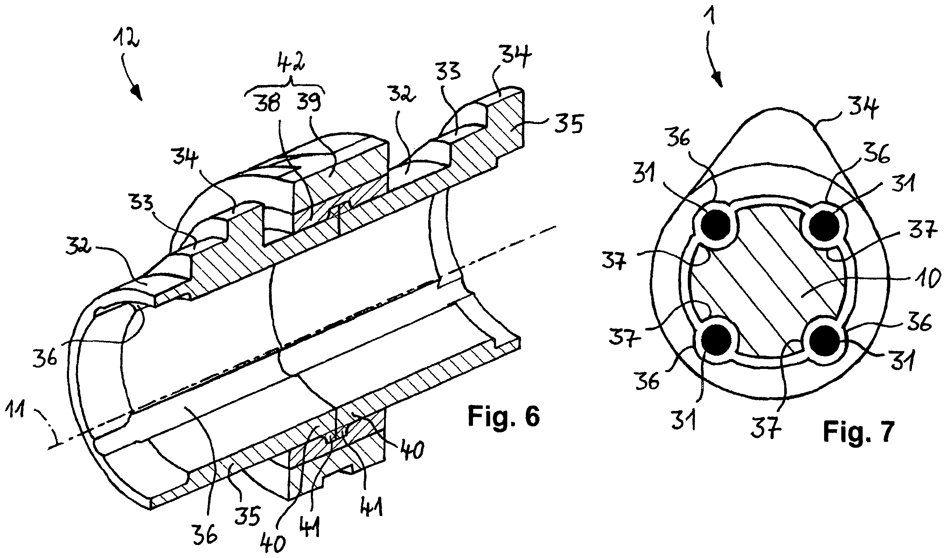

Figur 6 zeigt ein Ausführungsbeispiel eines Nockenpaketes 12 mit den Merkmalen der vorliegenden Erfindung. Das Nockenpaket 12 weist einen Aufbau aus zwei Mehrfachnockenelementen 35 und einem Verstellglied 42 auf. Jedes der Mehrfachnockenelemente 35 weist Nocken 32, 33 und 34 auf, wobei die Nocken 32 als Nullhubnocken ausgeführt sind. Die beiden Mehrfachnockenelemente 35 sind entlang einer gemeinsamen Wellenachse 11 stirnseitig aneinander angrenzend angeordnet. Innenseitig besitzen die Mehrfachnockenelemente 35 erfindungsgemäß Führungsnuten 36, in denen Wälzkörper geführt werden können. Die Führungsnuten 36 erstrecken sich über der gesamten Länge des Nockenpaketes 12 entlang der Wellenachse 11.

Das Verstellglied 42 ist durch ein aus einem metallischen Werkstoff bestehenden Steuerkonturelement 39 gebildet, das eine etwa ringförmige Ausgestaltung aufweist. Das Steuerkonturelement 39 umschließt dabei an den Mehrfachnockenelementen 35 angeformte Fügeabschnitte 40, mit denen die Mehrfachnockenelemente 35 aneinander angrenzen, sodass sich die Fügeabschnitte 40 etwa innenseitig in das Steuerkonturelement 39 hinein erstrecken. Zur Vervollständigung des Verstellgliedes 42 wird der radiale Bereich zwischen dem ringförmigen Steuerkonturelement 39 und den Fügeabschnitten 40 mit dem Material des angegossenen Körpers 38 aufgefüllt. Das Auffüllen des Materials kann in einem Urformwerkzeug geschehen, in das zuvor die Mehrfachnockenelemente 35 und das Steuerkonturelement 39 eingebracht sind. Das Urformwerkzeug kann dabei eine Werkzeugform aufweisen, die die freien Seitenflächen des angegossenen Körpers 38 definieren.

Nach Einspritzen oder Eingießen des Materials zur Bildung des angegossenen Körpers 38 entsteht mit den Mehrfachnockenelementen 35 und dem Steuerkonturelement 39 ein mechanisch belastbarer, fester Verbund, durch den das Nockenpaket 12 gebildet ist. Um einen Formschluss zwischen den Fügeabschnitten 40 der Mehrfachnockenelemente 35 und dem Material des angegossenen Körpers 38 zu schaffen, sind am randseitigen Ende der Fügeabschnitte 40 kragenförmige Formschlussbunde 41 angeformt, sodass in axialer Richtung der Wellenachse 11 ein geometrischer Formschluss zwischen den Fügeabschnitten 40 und dem angegossenen Körper 38 gebildet ist.

Die Darstellung zeigt lediglich beispielhaft die Verbindung zwischen einem Verstellglied 42 und zwei Mehrfachnockenelementen 35. Auf gleiche Weise kann mit einem angegossenen Körper 38 auch eine Verbindung zwischen einem Verstellglied 15 und einem oder mehreren Nocken 13, 14, 26, 27, 28, 29 geschaffen werden, wie diese beispielsweise in Figur 1 dargestellt sind.

Figur 7 zeigt eine Querschnittsansicht eine Nockenwelle 1 mit einem auf einer Trägerwelle 10 angeordneten Nockenpaket 12, das beispielhaft mit einer Nocke 34 dargestellt ist, die Bestandteil eines nicht näher spezifizierten Mehrfachnockenelementes sein kann. Innenseitig der Nocke 34 sind Führungsnuten 36 eingebracht, wobei auf dem Umfang verteilt insgesamt vier Führungsnuten 36 beispielhaft gezeigt sind. Korrespondierend dazu weist die Trägerwelle 10 vier Führungsnuten 37 auf, und Wälzkörper 31 sind sowohl innenseitig in den Führungsnuten 37 als auch außenseitig in den Führungsnuten 36 aufgenommen. Die Wälzkörper 31 bilden so gemeinsam mit den Führungsnuten 36 und 37 die erfindungsgemäße Wälzkörperführung, um das Nockenpaket 12 der Nockenwelle 1 in Richtung zur Wellenachse 11 axial zu verschieben und gleichzeitig verdrehgesichert anzuordnen.

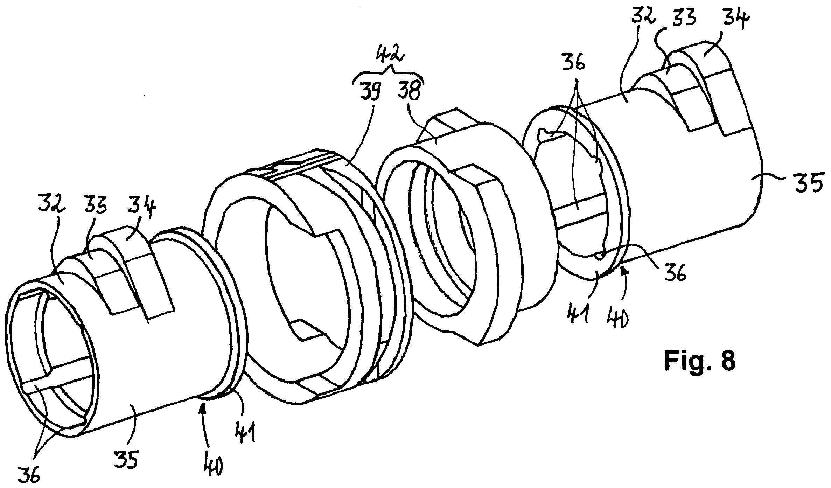

Figur 8 zeigt in einer Explosionsdarstellung ein Nockenpaket 12 mit zwei Mehrfachnockenelementen 35 und einem Steuerkonturelement 39, das gemeinsam mit einem Teil eines angegossenen Körpers 38 das Verstellglied 42 bildet. Der angegossene Körper 38 ist vereinzelt dargestellt, wodurch die sich ausbildende geometrische Form des Körpers 38 verdeutlicht wird, ohne dass der angegossene Körper 38 als Einzelteil montiert wird.

Das Ausführungsbeispiel zeigt Mehrfachnockenelemente 35 mit jeweils vier innenliegenden Führungsnuten 36 und Nocken 32, 33 und 34, die sich auf dem Außenumfang der Mehrfachnockenelemente 35 befinden, wobei beispielhaft der Nocken 32 als Nullhubnocken ausgebildet ist.

Am Ende der Fügeabschnitte 40, die an den Mehrfachnockenelementen 35 angeformt sind und aufeinander zuweisen, befinden sich Formschlussbunde 41, die gemeinsam mit dem angegossenen Körper 38 einen geometrischen Formschluss bilden. Die Fügeabschnitte 40 gehen gemäß dem gezeigten Ausführungsbeispiel von dem als Nullhubnocken ausgebildeten Nocken 32 nahtlos ineinander über, sodass der Fügeabschnitt 40 lediglich eine axiale Verlängerung des Nocken 32 bildet.

### Bezugszeichenliste

- 1: Nockenwelle
- 10: Trägerwelle
- 11: Wellenachse
- 12: Nockenpaket
- 13: Nocken, 13a Stirnseite
- 14: Nocken, 14a Stirnseite
- 15: Verstellglied, 15a Stirnseite
- 16: Innenverzahnung
- 17: Außenverzahnung
- 18: Rastnut
- 19: außenumfängliche Schweißverbindung
- 20: innenumfängliche Schweißverbindung
- 21: Lötverbindung
- 22: Zuganker
- 23: Lagerelement
- 24: Lagerbock
- 25: Lager
- 26: Nocke
- 27: Nocke
- 27': Nocke
- 28: Nocke
- 29: Nocke
- 30: Nutenführung
- 31: Wälzkörper
- 32: Nocke
- 33: Nocke
- 34: Nocke
- 35: Mehrfachnockenelement
- 36: Führungsnut
- 37: Führungsnut
- 38: angegossener Körper
- 39: Steuerkonturelement
- 40: Fügeabschnitt
- 41: Formschlussbund
- 42: Verstellglied

## Patentansprüche

1. Nockenwelle (1) mit einer Trägerwelle (10), die in einer Wellenachse (11) drehbeweglich lagerbar ist, wobei auf der Trägerwelle (10) wenigstens ein Nockenpaket (12) axial verschieblich angeordnet ist, und wobei das Nockenpaket (12) wenigstens zwei Nocken (13, 14, 26, 27, 28, 29, 32, 33, 34) und/oder ein Mehrfachnockenelement (35) und wenigstens ein Verstellglied (15) zur axialen Verstellung des Nockenpaketes (12) umfasst, wobei die Nocken (13, 14, 26, 27, 28, 29, 32, 33, 34) bzw. das Mehrfachnockenelement (35) und das wenigstens eine Verstellglied (15) in axial benachbarter Anordnung miteinander verbunden sind, wobei die Verbindung zwischen den Nocken (13, 14, 26, 27, 28, 29, 32, 33, 34) bzw. dem Mehrfachnockenelement (35) und dem Verstellglied (15) mittels eines angeformten Körpers (38) ausgebildet ist,
**dadurch gekennzeichnet,**
**dass** der Verbund aus den Nocken (13, 14, 26, 27, 28, 29, 32, 33, 34) bzw. dem Mehrfachnockenelement (35) und dem Verstellglied (15) mittels einer Wälzkörperführung mit Wälzkörpern (31) auf der Trägerwelle (10) axial verschiebbar gelagert ist, wobei in den Nocken (13, 14, 26, 27, 28, 29, 32, 33, 34) bzw. in dem Mehrfachnockenelement (35) wenigstens eine Führungsnut (36) zur Wälzkörperführung eingebracht ist.

2. Nockenwelle (1) nach Anspruch 1, **dadurch gekennzeichnet, dass** wenigstens zwei Nocken (32, 33, 34) zumindest ein einteiliges Mehrfachnockenelement (35) bilden, das axial benachbart zum Verstellglied (15, 42) angeordnet ist, wobei in den Nocken (13, 14, 26, 27, 28, 29, 32, 33, 34) und/oder im Mehrfachnockenelement (35) wenigstens eine Führungsnut (36) eingebracht ist, in der zumindest ein Wälzkörper (31) geführt ist.

3. Nockenwelle (1) nach Anspruch 1, **dadurch gekennzeichnet, dass** in der Trägerwelle (10) wenigstens eine Führungsnut (37) eingebracht ist, in der der zumindest eine Wälzkörper (31) geführt ist, sodass über den Wälzkörper (31) und die Führungsnuten (36, 37) das Nockenpaket (12) axial geführt und gegen die Trägerwelle (10) verdrehgesichert ist.

4. Nockenwelle (1) nach einem der Ansprüche 1 bis 3, **dadurch gekennzeichnet, dass** die Nocken (13, 14, 26, 27, 28, 29) und/oder das wenigstens eine Verstellglied (15) zumindest über Teilbereiche ihrer jeweiligen Stirnseiten (13a, 14a, 15a) miteinander verbunden sind.

5. Nockenwelle (1) nach einem der vorgenannten Ansprüche, **dadurch gekennzeichnet, dass** das Material des angegossenen Körpers (38) aus Aluminium, aus Magnesium oder aus Kunststoff gebildet und insbesondere in einem Spritzgussverfahren oder in einem Druckgussverfahren angegossen ist.

6. Nockenwelle (1) nach Anspruch 5, **dadurch gekennzeichnet, dass** das Verstellglied (42) wenigstens zweiteilig ausgebildet ist, wobei ein erster Teil durch ein Steuerkonturelement (39) und ein zweiter Teil durch den angegossenen Körper (38) gebildet ist.

7. Nockenwelle (1) nach Anspruch 6, **dadurch gekennzeichnet, dass** auf einer ersten Seite des Verstellgliedes (42) ein erstes Mehrfachnockenelement (35) und auf einer gegenüberliegenden zweiten Seite ein zweites Mehrfachnockenelement (35) angeordnet ist, wobei die Mehrfachnockenelemente (35) aufeinander zu weisende Fügeabschnitte (40) aufweisen, die mit dem Verstellglied (42) und insbesondere mit dem Steuerkonturelement (39) durch den angegossenen Körper (38) vergossen sind.

8. Nockenwelle (1) nach Anspruch 7, **dadurch gekennzeichnet, dass** am Fügeabschnitt (40) ein Formschlussbund (41) angeordnet ist, sodass mit dem angegossenen Körper (38) in Richtung der Wellenachse (11) ein Formschluss zwischen dem Verstellglied (42) und dem wenigstens einen Mehrfachnockenelement (35) gebildet ist.

9. Nockenwelle (1) nach einem der vorgenannten Ansprüche, **dadurch gekennzeichnet, dass** das Nockenpaket (12) wenigstens ein Lagerelement (23) umfasst, das vorzugsweise zur Bildung einer Nullhubnocke ausgebildet ist.

10. Verfahren zur Herstellung einer Nockenwelle (1) mit einer Trägerwelle (10), die in einer Wellenachse (11) drehbeweglich lagerbar ist, wobei auf der Trägerwelle (10) wenigstens ein Nockenpaket (12) axial verschieblich angeordnet wird und wobei das Nockenpaket (12) wenigstens zwei Nocken (13, 14, 26, 27, 28, 29) oder ein Mehrfachnockenelement (35) und wenigstens ein Verstellglied (15) zur axialen Verstellung des Nockenpaketes (12) umfasst,
umfassend wenigstens die folgenden Schritte:
- gegenseitiges Fügen der Nocken (13, 14, 26, 27, 28, 29) und des wenigstens einen Verstellgliedes (15) und den benachbart zu diesem angeordneten Nocken (26, 27) in axial benachbarter Anordnung bzw. gegenseitiges Fügen des Mehrfachnockenelements (35) und des wenigstens einen Verstellgliedes (15) in axial benachbarter Anordnung,
wobei die Verbindung zwischen den Nocken bzw. dem Mehrfachnockenelement (35) und dem Verstellglied mittels eines angeformten Körpers (38) ausgebildet wird,
und
- direktes Anordnen des Verbundes auf der Trägerwelle (10) mittels einer Wälzkörperführung mit Wälzkörpern (31), wobei in die Nocken (13, 14, 26, 27, 28, 29) bzw. in das Mehrfachnockenelement (35) eine Führungsnut (36) zur Wälzkörperführung eingebracht ist.

11. Verfahren nach Anspruch 10, **dadurch gekennzeichnet, dass** wenigstens zwei Nocken (32, 33, 34) wenigstens ein Mehrfachnockenelement (35) bilden und das axial benachbart zum Verstellglied (15) angeordnet wird, wobei in die Nocken (13, 14, 26, 27, 28, 29) und/oder in das Mehrfachnockenelement (35) und/oder in das Verstellglied (15) eine Führungsnut (36) eingebracht wird, wobei die Innenverzahnung (16) mit einer Außenverzahnung (17) auf der Trägerwelle (10) oder wobei die Führungsnut (36) über einen Wälzkörper (31) axial verschiebbar in Verbindung mit der Trägerwelle (10) gebracht wird.

12. Verfahren nach Anspruch 11, **dadurch gekennzeichnet, dass** die Führungsnut (36) jeweils einzeln in die Nocken (13, 14, 26, 27, 28, 29) und/oder in eines von mehreren Mehrfachnockenelementen (35) und/oder in das Verstellglied (15) eingebracht wird, wobei anschließend die Nocken (13, 14, 26, 27, 28, 29) und/oder das Mehrfachnockenelement (35) und/oder das Verstellglied (15) in axial benachbarter Anordnung gegenseitig gefügt werden.

13. Verfahren nach einem der Ansprüche 10 bis 12, **dadurch gekennzeichnet, dass** die Nocken (13, 14, 26, 27, 28, 29) und/oder in das Mehrfachnockenelement (35) und das Verstellglied (15) in axial benachbarter Anordnung gegenseitig gefügt werden, wobei anschließend die Führungsnut (36) in die Nocken (13, 14, 26, 27, 28, 29) und/oder in das Mehrfachnockenelement (35) und/oder in das Verstellglied (15) eingebracht wird.

## Claims

1. Camshaft (1) having a support shaft (10) which can be mounted such that it can be moved rotationally in a shaft axis (11), at least one cam pack (12) being arranged axially displaceably on the support shaft (10), and the cam pack (12) comprising at least two cams (13, 14, 26, 27, 28, 29, 32, 33, 34) and/or a multiple cam element (35) and at least one adjusting member (15) for axially adjusting the cam pack (12), the cams (13, 14, 26, 27, 28, 29, 32, 33, 34) and/or the multiple cam element (35) and the at least one adjusting member (15) being connected to one another in an axially adjacent arrangement, the connection between the cams (13, 14, 26, 27, 28, 29, 32, 33, 34) and/or the multiple cam element (35) and the adjusting member (15) being configured by means of an integrally formed body (38),
**characterized in that**
the assembly comprising the cams (13, 14, 26, 27, 28, 29, 32, 33, 34) and/or the multiple cam element (35) and the adjusting member (15) being arranged axially displaceably on the support shaft (10) by means of a rolling body guide having rolling bodies (31), at least one guide groove (36) for rolling body guidance being made in the cams (13, 14, 26, 27, 28, 29, 32, 33, 34) and/or in the multiple cam element (35).

2. Camshaft (1) according to Claim 1, **characterized in that** at least two cams (32, 33, 34) form at least one single-piece multiple cam element (35) which is arranged axially adjacently with respect to the adjusting member (15, 42), at least one guide groove (36) being made in the cams (13, 14, 26, 27, 28, 29, 32, 33, 34) and/or in the multiple cam element (35), in which guide groove (36) at least one rolling body (31) is guided.

3. Camshaft (1) according to Claim 1, **characterized in that** at least one guide groove (37) is made in the support shaft (10), in which guide groove (37) the at least one rolling body (31) is guided, with the result that the cam pack (12) is guided axially and is secured with respect to the support shaft (10) such that it cannot rotate via the rolling body (31) and the guide grooves (36, 37).

4. Camshaft (1) according to one of Claims 1 to 3, **characterized in that** the cams (13, 14, 26, 27, 28, 29) and/or the at least one adjusting member (15) are connected to one another at least via part regions of their respective ends sides (13a, 14a, 15a).

5. Camshaft (1) according to one of the preceding claims, **characterized in that** the material of the integrally moulded body (38) is formed from aluminium, from magnesium or from plastic, and is integrally moulded, in particular, in an injection moulding process or in a high-pressure injection moulding process.

6. Camshaft (1) according to Claim 5, **characterized in that** the adjusting member (42) is of at least two-piece configuration, a first part being formed by a control contour element (39) and a second part being formed by the integrally moulded body (38).

7. Camshaft (1) according to Claim 6, **characterized in that** a first multiple cam element (35) is arranged on a first side of the adjusting member (42) and a second multiple cam element (35) is arranged on an opposite second side, the multiple cam elements (35) having joining sections (40) which point towards one another and are moulded to the adjusting member (42) and, in particular, to the control contour element (39) by way of the integrally moulded body (38).

8. Camshaft (1) according to Claim 7, **characterized in that** a positively locking collar (41) is arranged on the joining section (40), with the result that a positively locking connection is formed between the adjusting member (42) and the at least one multiple cam element (35) by way of the integrally moulded body (38) in the direction of the shaft axis (11).

9. Camshaft (1) according to one of the preceding claims, **characterized in that** the cam pack (12) comprises at least one bearing element (23) which is preferably configured for forming a zero lift cam.

10. Method for producing a camshaft (1) having a support shaft (10) which can be mounted such that it can be moved rotationally in a shaft axis (11), at least one cam pack (12) being arranged axially displaceably on the support shaft (10), and the cam pack (12) comprising at least two cams (13, 14, 26, 27, 28, 29) or a multiple cam element (35) and at least one adjusting member (15) for axially adjusting the cam pack (12),
comprising at least the following steps:
- mutual joining of the cams (13, 14, 26, 27, 28, 29) and the at least one adjusting member (15) and the cams (26, 27) which are arranged adjacently with respect thereto in an axially adjacent arrangement or mutual joining of the multiple cam element (35) and the at least one adjusting member (15) in an axially adjacent arrangement,
the connection between the cam or the multiple cam element (35) and the adjusting member being configured by means of an integrally formed body (38),
and
- direct arrangement of the assembly on the support shaft (10) by means of a rolling body guide having rolling bodies (31), a guide groove (36) for rolling body guidance being made in the cams (13, 14, 26, 27, 28, 29) or in the multiple cam element (35).

11. Method according to Claim 10, **characterized in that** at least two cams (32, 33, 34) form at least one multiple cam element (35) which is arranged axially adjacently with respect to the adjusting member (15), a guide groove (36) being made in the cams (13, 14, 26, 27, 28, 29) and/or in the multiple cam element (35) and/or in the adjusting member (15), the internal spline system (16) being brought into connection with an external spline system (17) on the support shaft (10), or the guide groove (36) being brought into connection with the support shaft (10) such that it can be displaced axially via a rolling body (31).

12. Method according to Claim 11, **characterized in that** the guide groove (36) is made in each case individually in the cams (13, 14, 26, 27, 28, 29) and/or in one of a plurality of multiple cam elements (35) and/or in the adjusting member (15), the cams (13, 14, 26, 27, 28, 29) and/or the multiple cam element (35) and/or the adjusting member (15) subsequently being joined mutually in an axially adjacent arrangement.

13. Method according to one of Claims 10 to 12, **characterized in that** the cams (13, 14, 26, 27, 28, 29) and/or the multiple cam element (35) and the adjusting member (15) are joined mutually in an axially adjacent arrangement, the guide groove (36) subsequently being made in the cams (13, 14, 26, 27, 28, 29) and/or in the multiple cam element (35) and/or in the adjusting member (15).

## Revendications

1. Arbre à cames (1) comprenant un arbre de support (10) qui peut être supporté de manière déplaçable en rotation dans un axe d'arbre (11), au moins un paquet de cames (12) étant disposé de manière déplaçable axialement sur l'arbre de support (10), et le paquet de cames (12) comprenant au moins deux cames (13, 14, 26, 27, 28, 29, 32, 33, 34) et/ou un élément de came multiple (35) et au moins un élément d'ajustement (15) pour l'ajustement axial du paquet de cames (12), les cames (13, 14, 26, 27, 28, 29, 32, 33, 34), respectivement l'élément de came multiple (35) et l'au moins un élément d'ajustement (15) étant reliés les uns et les autres suivant un agencement adjacent axialement, le raccordement entre les cames (13, 14, 26, 27, 28, 29, 32, 33, 34) ou l'élément de came multiple (35) et l'élément d'ajustement (15) étant réalisé au moyen d'un corps façonné (38),
**caractérisé en ce que**
l'assemblage constitué des cames (13, 14, 26, 27, 28, 29, 32, 33, 34) ou de l'élément de came multiple (35) et de l'élément d'ajustement (15) est supporté de manière déplaçable axialement sur l'arbre de support (10) au moyen d'un guidage de corps de roulement avec des corps de roulement (31), au moins une rainure de guidage (36) pour le guidage des corps de roulement étant réalisée dans les cames (13, 14, 26, 27, 28, 29, 32, 33, 34) ou dans l'élément de came multiple (35).

2. Arbre à cames (1) selon la revendication 1, **caractérisé en ce qu'**au moins deux cames (32, 33, 34) forment au moins un élément de came multiple d'une seule pièce (35) qui est disposé en position adjacente axialement à l'élément d'ajustement (15, 42), au moins une rainure de guidage (36) étant réalisée dans les cames (13, 14, 26, 27, 28, 29, 32, 33, 34) et/ou dans l'élément de came multiple (35), dans laquelle est guidé au moins un corps de roulement (31).

3. Arbre à cames (1) selon la revendication 1, **caractérisé en ce que** dans l'arbre de support (10) est réalisée au moins une rainure de guidage (37), dans laquelle est guidé l'au moins un corps de roulement (31) de telle sorte que le paquet de cames (12) soit guidé axialement et de manière solidaire en rotation par rapport à l'arbre de support (10) par le biais du corps de roulement (31) et des rainures de guidage (36, 37).

4. Arbre à cames (1) selon l'une quelconque des revendications 1 à 3, **caractérisé en ce que** les cames (13, 14, 26, 27, 28, 29) et/ou l'au moins un élément d'ajustement (15) sont connectés les uns aux autres au moins par le biais de régions partielles de leurs côtés frontaux respectifs (13a, 14a, 15a).

5. Arbre à cames (1) selon l'une quelconque des revendications précédentes, **caractérisé en ce que** le matériau du corps coulé (38) est formé d'aluminium, de magnésium ou de plastique et est notamment coulé dans un procédé de moulage par injection ou dans un procédé de coulée sous pression.

6. Arbre à cames (1) selon la revendication 5, **caractérisé en ce que** l'élément d'ajustement (42) est réalisé au moins en deux parties, une première partie étant formée par un élément de contour de commande (39) et une deuxième partie étant formée par le corps coulé (38).

7. Arbre à cames (1) selon la revendication 6, **caractérisé en ce que** sur un premier côté de l'élément d'ajustement (42) est disposé un premier élément de came multiple (35) et sur un deuxième côté opposé, est disposé un deuxième élément de came multiple (35), les éléments de came multiple (35) présentant des portions d'assemblage tournées l'une vers l'autre (40) qui sont scellées avec l'élément d'ajustement (42) et en particulier avec l'élément de contour de commande (39) par le corps coulé (38).

8. Arbre à cames (1) selon la revendication 7, **caractérisé en ce qu'**un épaulement d'engagement par correspondance de formes (41) est disposé sur la portion d'assemblage (40), de telle sorte qu'un engagement par correspondance de formes entre l'élément d'ajustement (42) et l'au moins un élément de came multiple (35) soit formé avec le corps coulé (38) dans la direction de l'axe d'arbre (11).

9. Arbre à cames (1) selon l'une quelconque des revendications précédentes, **caractérisé en ce que** le paquet de cames (12) comprend au moins un élément de palier (23) qui est réalisé de préférence pour former une came à course nulle.

10. Procédé de fabrication d'un arbre à cames (1) comprenant un arbre de support (10) qui peut être supporté de manière déplaçable en rotation dans un axe d'arbre (11), au moins un paquet de cames (12) étant disposé de manière déplaçable axialement sur l'arbre de support (10), et le paquet de cames (12) comprenant au moins deux cames (13, 14, 26, 27, 28, 29) ou un élément de came multiple (35) et au moins un élément d'ajustement (15) pour l'ajustement axial du paquet de cames (12),
comprenant au moins les étapes suivantes :
- assemblage mutuel des cames (13, 14, 26, 27, 28, 29) et de l'au moins un élément d'ajustement (15) et des cames (26, 27) disposées en position adjacente à celui-ci suivant un agencement axialement adjacent ou un assemblage mutuel de l'élément de came multiple (35) et de l'au moins un élément d'ajustement (15) suivant un agencement adjacent axialement,
l'assemblage entre les cames ou l'élément de came multiple (35) et l'élément d'ajustement étant réalisé au moyen d'un corps façonné (38), et
- agencement direct de l'assemblage sur l'arbre de support (10) au moyen d'un guidage de corps de roulement avec des corps de roulement (31), une rainure de guidage (36) pour le guidage des corps de roulement étant réalisée dans les cames (13, 14, 26, 27, 28, 29) ou dans l'élément de came multiple (35).

11. Procédé selon la revendication 10, **caractérisé en ce qu'**au moins deux cames (32, 33, 34) forment au moins un élément de came multiple (35) qui est disposé en position adjacente axialement à l'élément d'ajustement (15), une rainure de guidage (36) étant réalisée dans les cames (13, 14, 26, 27, 28, 29) et/ou dans l'élément de came multiple (35) et/ou dans l'élément d'ajustement (15), la denture interne (16) étant amenée en liaison de manière déplaçable axialement avec une denture externe (17) sur l'arbre de support (10) ou la rainure de guidage (36) étant amenée en liaison par le biais d'un corps de roulement (31) de manière déplaçable axialement avec l'arbre de support (10).

12. Procédé selon la revendication 11, **caractérisé en ce que** la rainure de guidage (36) est à chaque fois introduite individuellement dans les cames (13, 14, 26, 27, 28, 29) et/ou dans l'un de plusieurs éléments de cames multiples (35) et/ou dans l'élément d'ajustement (15), les cames (13, 14, 26, 27, 28, 29) et/ou l'élément de came multiple (35) et/ou l'élément d'ajustement (15) étant ensuite assemblés mutuellement suivant un agencement axialement adjacent.

13. Procédé selon l'une quelconque des revendications 10 à 12, **caractérisé en ce que** les cames (13, 14, 26, 27, 28, 29) et/ou l'élément de came multiple (35) et l'élément d'ajustement (15) sont assemblés mutuellement suivant un agencement adjacent axialement, la rainure de guidage (36) étant ensuite réalisée dans les cames (13, 14, 26, 27, 28, 29) et/ou dans l'élément de came multiple (35) et/ou dans l'élément d'ajustement (15).
